# EUROPEAN PATENT APPLICATION

(11) **EP 4 144 959 A1**
(43) Date of publication of application: **08.03.2023**
(21) Application number: 22193983.8
(22) Date of filing: 05.09.2022
(51) Int. Cl.: F01D 5/14, F01D 9/04

(54) **FLUID MACHINE FOR AN AIRCRAFT ENGINE AND AIRCRAFT ENGINE**

(30) Priority: 03.09.2021 US 202117466214
(71) Applicant: Pratt & Whitney Canada Corp., (01BE5) Longueuil, QC J4G 1A1 (CA)
(72) Inventor: DUONG, Hien, (01BE5) Longueuil, J4G 1A1 (CA); KANDASAMY, Vijay, (01BE5) Longueuil, J4G 1A1 (CA)
(74) Representative: Dehns

(57) **Abstract**

A fluid machine has first (21A) and second walls (21B), a gaspath defined between the first wall (21A) and the second wall (21B); a rotor having blades rotatable about the central axis (11) and a stator (31) having a row of vanes (33) having airfoils (35) including leading edges (35A), trailing edges (35B), pressure sides (35C) and suction sides (35D) opposed the pressure sides (35C), and depressions (40) defined in the first wall (21A), the depressions (40) extending from a baseline surface (BS) of the first wall (21A) away from the second wall (21B), a depression (40) of the depressions (40) located circumferentially between a pressure side (35C) of the pressure sides (35C) and a suction side (35D) of the suction sides (35D), the depression (40) axially overlapping the airfoils (35) and extending in a downstream direction from an upstream end to a downstream end, the downstream end located closer to a trailing edge (35B) of the trailing edges (35B) than to a leading edge (35A) of the leading edges (35A).

## Description

### TECHNICAL FIELD

The application relates generally to aircraft engines, such as gas turbine engines and, more particularly, to compressors and turbines of such engines.

### BACKGROUND OF THE ART

Aircraft engines, such as gas turbine engines, comprise compressors that includes one or more compressor stage. A typical compressor stage includes a stator having vanes and a rotor having blades. The rotor is rotatable relative to the stator. The stator is used to orient the flow such that the flow exiting the stator meets leading edges of the blades at an optimal angle of attack. In some operating conditions, the stator exhibit corner losses and secondary flows that may impair performance. Hence, improvements are sought.

### SUMMARY

In one aspect, there is provided a fluid machine for an aircraft engine comprising: a first wall and a second wall circumferentially extending around a central axis; a gaspath defined between the first wall and the second wall; a rotor having blades circumferentially distributed around the central axis and extending across the gaspath, the rotor rotatable about the central axis; and a stator in fluid communication with the rotor and having: a row of vanes extending across the gaspath and circumferentially distributed around the central axis, the vanes having airfoils including leading edges, trailing edges, pressure sides and suction sides opposed the pressure sides, and depressions defined in the first wall, the depressions extending from a baseline surface of the first wall away from the second wall, a depression of the depressions located circumferentially between a pressure side of the pressure sides and a suction side of the suction sides, the depression axially overlapping the airfoils and extending in a downstream direction from an upstream end to a downstream end, the downstream end located closer to a trailing edge of the trailing edges than to a leading edge of the leading edges.

Optionally and in accordance with the above the fluid machine may include any of the following features, in any combinations.

Optionally and in accordance with any of the above, a ratio of an axial length (h) of the depression taken along an axial direction relative to the central axis to an axial length (C) of the stator taken along the axial direction from the leading edges to the trailing edges ranges from 0.5 to 1.5.

Optionally and in accordance with any of the above, a ratio of a thickness (t) of the depression taken along a circumferential direction relative to the central axis to a pitch (p) of the stator extending along the circumferential direction from a leading edge of the leading edges to an adjacent leading edge of the leading edges ranges from 0.01 to 0.25.

Optionally and in accordance with any of the above, a ratio of a distance (h1) taken along an axial direction relative to the central axis from an upstream end of the depression to a leading edge of the leading edges to an axial length (C) of the stator taken along the axial direction from the leading edges to the trailing edges ranges from 0.25 to 0.75.

Optionally and in accordance with any of the above, a ratio of a distance (h2) taken along an axial direction relative to the central axis from the downstream end of the depression to the trailing edge to an axial length (C) of the stator taken along the axial direction from the leading edges to the trailing edges ranges from 0 to 0.5.

Optionally and in accordance with any of the above, a ratio of a depth (D) of the depression taken along a radial direction relative to the central axis to a span (S) of the airfoils ranges from 0.05 to 0.1.

Optionally and in accordance with any of the above, the depression is located closer to the pressure side than to the suction side.

Optionally and in accordance with any of the above, the depression is located closer the suction side than to the pressure side.

Optionally and in accordance with any of the above, the depression overlaps the trailing edge.

Optionally and in accordance with any of the above, the depression extends substantially parallel to an airfoil of the airfoils.

In another aspect, there is provided an aircraft engine comprising: a compressor section having: a first wall and a second wall circumferentially extending around a central axis; a gaspath defined between the first wall and the second wall; a rotor having blades circumferentially distributed around the central axis and extending across the gaspath, the rotor rotatable about the central axis; and a stator in fluid communication with the rotor and having: a row of vanes extending across the gaspath and circumferentially distributed around the central axis, the vanes having airfoils including leading edges, trailing edges, pressure sides and suction sides opposed the pressure sides, and depressions defined in the first wall, the depressions extending from a baseline surface of the first wall away from the second wall, a depression of the depressions located circumferentially between a pressure side of the pressure sides and a suction side of the suction sides, the depression axially overlapping the airfoils and extending in a downstream direction to a downstream end of the depression, the downstream end located closer to a trailing edge of the trailing edges than to a leading edge of the leading edges.

Optionally and in accordance with any of the above the aircraft engine may include any of the following features, in any combinations.

Optionally and in accordance with any of the above, a ratio of an axial length (h) of the depression taken along an axial direction relative to the central axis to an axial length (C) of the stator taken along the axial direction from the leading edges to the trailing edges ranges from 0.5 to 1.5.

Optionally and in accordance with any of the above, a ratio of a thickness (t) of the depression taken along a circumferential direction relative to the central axis to a pitch (p) of the stator extending along the circumferential direction from a leading edge of the leading edges to an adjacent leading edge of the leading edges ranges from 0.01 to 0.25

Optionally and in accordance with any of the above, a ratio of a distance (h1) taken along the axial direction from an upstream end of the depression to the leading edge to the axial length (C) of the stator taken along the axial direction from the leading edges to the trailing edges ranges from 0.25 to 0.75.

Optionally and in accordance with any of the above, a ratio of a distance (h2) taken along the axial direction from the downstream end of the depression to the trailing edge to the axial length (C) of the stator taken along the axial direction from the leading edges to the trailing edges ranges from 0 to 0.5.

Optionally and in accordance with any of the above, a ratio of a depth (D) of the depression taken along a radial direction relative to the central axis to a span (S) of the airfoils ranges from 0.05 to 0.1.

Optionally and in accordance with any of the above, the depression is located closer to the pressure side than to the suction side.

Optionally and in accordance with any of the above, the depression is located closer to the suction side than to the pressure side.

Optionally and in accordance with any of the above, the depression overlaps the trailing edge.

Optionally and in accordance with any of the above, the depression extends substantially parallel to an airfoil of the airfoils.

### DESCRIPTION OF THE DRAWINGS

Reference is now made to the accompanying figures in which:
Fig. 1 is a schematic cross sectional view of an aircraft engine depicted as a gas turbine engine;
Fig. 2 is a schematic cross-sectional view of a portion of a compressor of the gas turbine engine of Fig. 1, the cross-sectional view taken on a plane containing a central axis of the gas turbine engine of Fig. 1;
Fig. 3 is a schematic cross-sectional view of a stator of the compressor of the gas turbine engine of Fig. 1 in accordance with one embodiment and taken on a plane normal to a radial direction relative to the central axis;
Fig. 4 is a schematic cross-sectional view of a stator of the compressor of the gas turbine engine of Fig. 1 in accordance with another embodiment and taken on a plane normal to a radial direction relative to the central axis; and
Fig. 5 is a cross-sectional view of a depression defined in a gaspath wall of the stator of Fig. 2.

### DETAILED DESCRIPTION

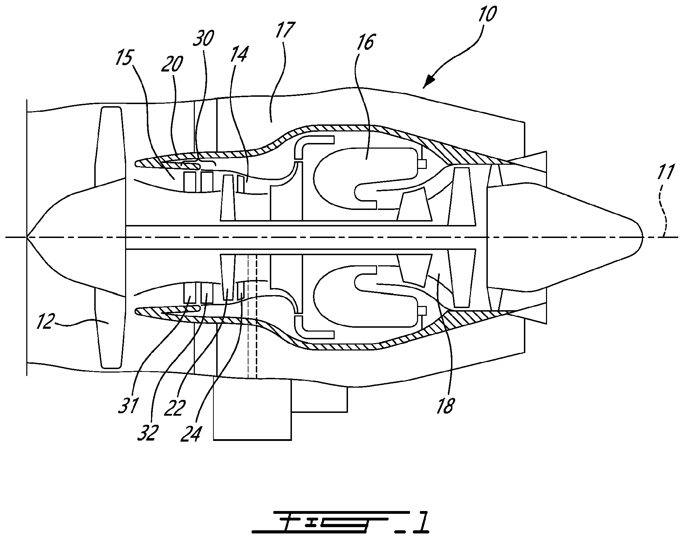

Fig. 1 illustrates an aircraft engine depicted as a gas turbine engine 10 of a type preferably provided for use in subsonic flight, generally comprising in serial flow communication a fan 12, a compressor section 14 for pressurizing the air, a combustor 16 in which the compressed air is mixed with fuel and ignited for generating an annular stream of hot combustion gases, and a turbine section 18 for extracting energy from the combustion gases. The fan 12, the compressor section 14, and the turbine section 18 are rotatable about a central axis 11 of the gas turbine engine 10. The principles of the present disclosure may apply to any gas turbine engine such as turboprop and turboshaft gas turbine engines.

The compressor section 14 includes one or more compressor rotors 22 and stators 24 in fluid communication with the rotors 22. The exemplary gas turbine engine 10 of Fig. 1 is a turbofan engine including the fan 12 through which ambient air is propelled. An airflow flowing between blades of the fan 12 is split between an engine core gaspath 15 and a bypass flow path 17 downstream of the fan 12. The gas turbine engine 10 has an engine casing 20 that circumferentially extends around the central axis 11. The core gaspath 15 is therefore located radially inwardly of the engine casing 20 relative to the central axis 11 and the bypass flow path 17 located radially outwardly of the engine casing 20 relative to the central axis 11.

As will be described in further detail below, the compressor section 14 of the gas turbine engine 10 includes at least one compression stage having a tandem stator assembly 30 (which may be alternately referred to as a dual stator assembly), composed of two individual stators, namely a first stator 31 and a second stator 32 in immediate flow-wise succession (i.e. without any rotor therebetween); the second stator 32 located downstream of the first stator 31 relative to the air flow flowing in the core gaspath 15. In the embodiment depicted in Fig. 1, the tandem stator assembly 30 is shown as being part of the first compression stage, that is it is located downstream of the fan 12 at the inlet of a core of the engine 10 and within the engine core gaspath 15. It is to be understood, however, that the present tandem stator assembly 30 may form part of other compression stages, such as those further downstream within the core of the gas turbine engine 10, either instead of or addition to being immediately downstream from the fan 12. In some embodiments, the tandem stator assembly 30 may be used in a turbine stage of the turbine section 18. The tandem stator 30 may be used in the bypass flow path 17.

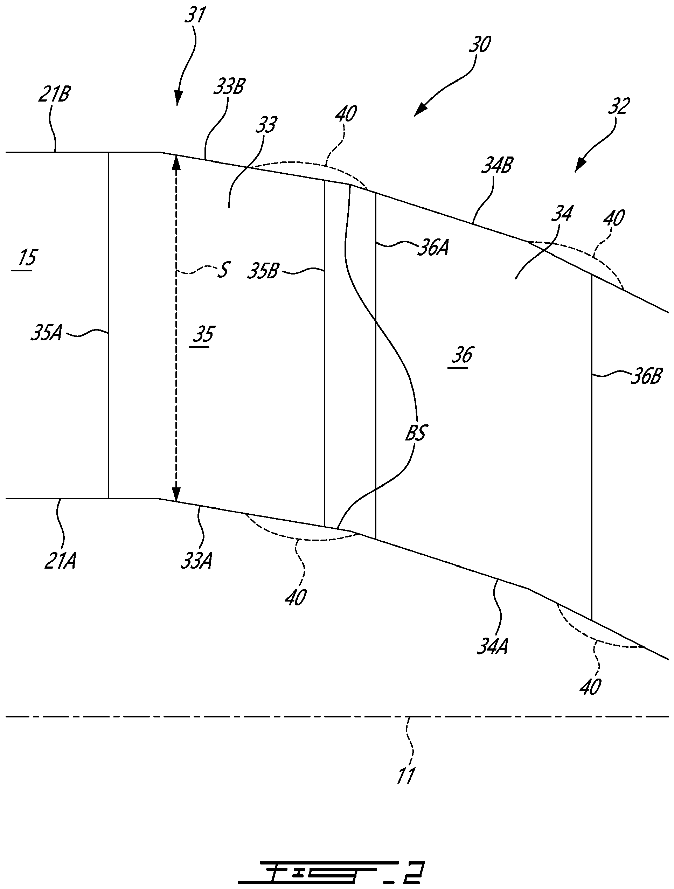

Referring more particularly to Fig. 2, a potion of the compressor section 14 including the tandem stator 30 is shown in greater detail. The core gaspath 15 is defined radially between an inner gaspath wall 21A, which may include vane platforms (not shown), and an outer gaspath wall 21B, which may include vane shroud (not shown). The outer gaspath wall 21B is located radially outwardly of the inner gaspath wall 21A relative to the central axis 11.

The first stator 31 includes a first row of a plurality of first vanes 33 and the second stator 32 includes a second row of a plurality of second vanes 34. The first vanes 33 and the second vanes 34 are circumferentially distributed around the central axis 11. The first vanes 33 may be staggered relative to the second vanes 34. In other words, a circumferential position of each of the first vanes 33 may be between circumferential positions of two circumferentially adjacent ones of the second vanes 34. The first vanes 33 extend from first inner ends 33A at the inner gaspath wall 21A to first outer ends 33B at the outer gaspath wall 21B. The second vanes 34 extend from second inner ends 34A at the inner gaspath wall 21A to second outer ends 34B at the outer gaspath wall 21B.

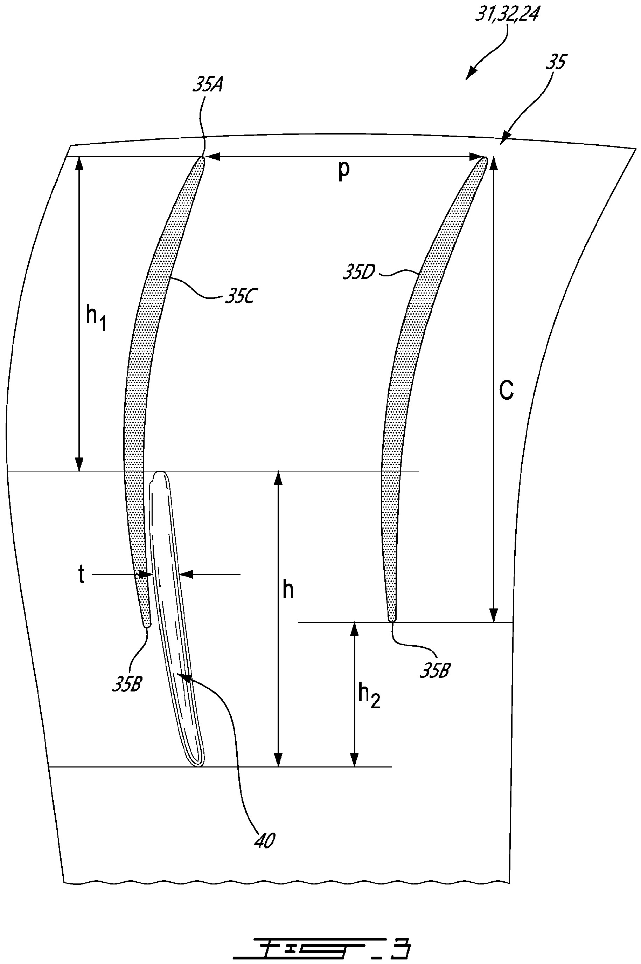

Referring to Figs. 2-3, the first vanes 33 include first airfoils 35 having first leading edges 35A, first trailing edges 35B downstream of the first leading edges 35A, first pressure sides 35C (Fig. 3), and first suction sides 35D (Fig. 3) opposed the first pressure sides 35C. The first airfoils 35 extend in a direction having a radial component relative to the central axis 11 from the inner gaspath wall 21A to the outer gaspath wall 21B. The second vanes 34 include second airfoils 36 that extend in a direction having a radial component relative to the central axis 11 from the inner gaspath wall 21A to the outer gaspath wall 21B. The second airfoils 36 have second leading edges 36A, second trailing edges 36B downstream of the second leading edges 36A, second pressure sides, and second suction sides opposed the second pressure sides.

In the embodiment shown, the first airfoils 35 are offset from the second airfoils 36 such that the second leading edges 36A are located downstream of the first trailing edges 35B relative to the air flow flowing in the core gaspath 15. An axial offset is therefore defined between the second leading edges 36A and the first trailing edges 35B. In some embodiments, the first airfoils 35 may be at least partially axially overlapped by the second airfoils 36 such that the second leading edges 36A are located upstream of the first trailing edges 35B. In some embodiments, the second leading edges 36A may be axially aligned with the first trailing edges 35B.

In some operating conditions, for instance when the stator is highly loaded, incur large corner loss may occur as result of boundary layer build up. Large boundary layer build up toward trailing edges of the airfoils and proximate suction sides thereof may lead to high flow deviation and potential corner separation due to additional pressure side flow leakage across the trailing edge. This may induce flow deviation and wake shedding, which is undesirable.

Still referring to Figs. 2-3, the tandem stator 30 includes depressions 40 that are defined in one or both of the inner gaspath wall 21A and the outer gaspath wall 21B. The depressions 40 extend from a baseline surface BS of the inner gaspath wall 21A and/or the outer gaspath wall 21B and away from the core gaspath 15. The baseline surface BS is a surface of the gaspath walls free of the depressions 40. As shown in Fig. 3, the depressions 40 are located circumferentially between the first pressure sides 35C and the first suction sides 35D. The depressions 40 are located in vicinity of the airfoil proximate the trailing edge. The depressions 40 may be asymmetrical with respect to a plane containing the central axis 11 and intersecting a center of a space between the first vanes 33 and the second vanes 34.

Each of the first airfoils 35 may be axially overlapped by a respective one of the depressions 40. Similarly, each of the second airfoils 36 may be axially overlapped by a respective one of the depressions 40. Any stator of the compressor section 14 and/or any stator of the turbine section 18 may include the depressions 40. Both stators 31, 32 of the tandem stator 30 may include the depressions 40. In some embodiments, only one of the first and second stators 31, 32 of the tandem stator 30 include the depressions 40.

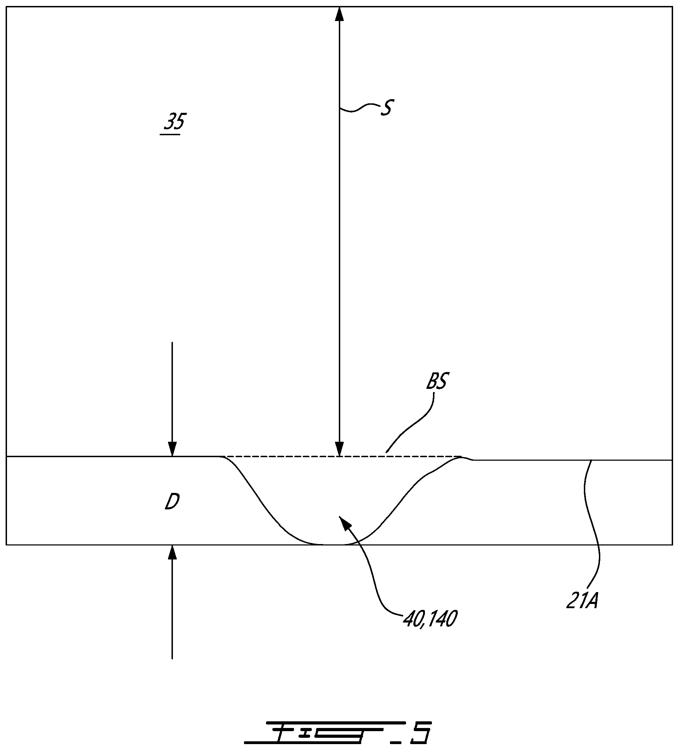

Referring more particularly Figs. 3 and 5, airfoils of one of the stators are shown in greater detail with their respective depressions 40. The description below refer to the first stator 31 and to the first airfoils 35. It will however be appreciated that the description below may apply to any stators of the gas turbine engine 10.

In the embodiment shown, the depressions 40 are located adjacent the first pressure side 35C of the first airfoils 35. That is, the depressions 40 are located closer to the first pressure sides 35C than to the first suction sides 35D. The depressions 40 may axially overlap the first trailing edges 35B. That is, the depressions 40 may extend from an upstream end located upstream of the first trailing edges 35B to a downstream end located downstream of the first trailing edges 35B. A major portion (e.g. 50% or more) of the depressions 40 may be located downstream of a mid-chord location of the first airfoils 35. The depressions 40 extend from upstream ends to downstream ends. The downstream ends of the depressions 40 may be located closer to the first trailing edges 35B than to the first leading edges 35.

In the illustrated embodiment, a ratio of an axial length h of the depressions 40 taken along an axial direction relative to the central axis 11 to an axial length C of the first stator 31 taken along the axial direction from the first leading edges 35A to the first trailing edges 35B ranges from 0.5 to 1.5. A ratio of a thickness t of the depressions 40 taken along a circumferential direction relative to the central axis 11 to a pitch p of the first stator 31, which corresponds to a distance extending along the circumferential direction between two adjacent ones of the first leading edges 35A, may range from 0.01 to 0.25. A ratio of a distance h₁ taken along the axial direction relative to the central axis 11 from upstream ends of the depressions 40 to the first leading edges 35A to the axial length C of the first stator 31 taken along the axial direction from the first leading edges 35A to the first trailing edges 35B ranges from 0.25 to 0.75. A ratio of a distance h₂ taken along the axial direction relative to the central axis 11 from downstream ends of the depressions 40 to the first trailing edges 35B to the axial length C of the first stator 31 may range from 0.0 to 0.5. Hence, the downstream ends of the depressions 40 may be axially aligned with the first trailing edges 35B or, alternatively, the depressions 40 may extend further downstream of the first trailing edges 35B. In some embodiments, the depressions 40 may overlap the second stator 32 in the case of a tandem stator application. A ratio of a depth D of the depressions 40 taken along a radial direction relative to the central axis 11 to a span S of the first airfoils 35 may range from 0.05 to 0.1. The depth D may extend from the baseline surface BS to deepest locations of the depressions 40. All of the above ratios may apply to any of the stators of the gas turbine engine that include the depressions 40.

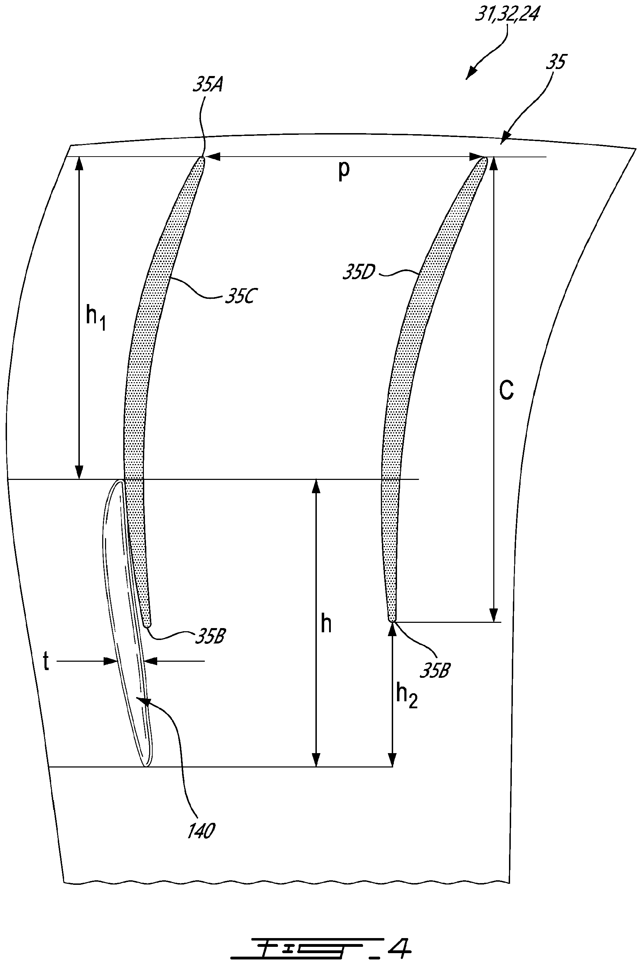

Referring now to Fig. 4, the first stator 31 may include depressions 140 that may be located adjacent the first suction sides 35D of the first airfoils 35. That is, the depressions 140 are located closer to the suction sides 35D than to the pressure sides 35C. The depressions 140 may axially overlap the first trailing edges 35B. That is, the depressions 140 may extend from an upstream end located upstream of the first trailing edges 35B to a downstream end located downstream of the first trailing edges 35C.

In the illustrated embodiment, a ratio of an axial length h of the depressions 140 taken along an axial direction relative to the central axis 11 to an axial length C of the first stator 31 taken along the axial direction from the first leading edges 35A to the first trailing edges 35B ranges from 0.5 to 1.5. A ratio of a thickness t of the depressions 140 taken along a circumferential direction relative to the central axis 11 to a pitch p of the first stator 31, which corresponds to a distance extending along the circumferential direction between two adjacent ones of the first leading edges 35A may range from 0.01 to 0.25. A ratio of a distance h₁ taken along the axial direction relative to the central axis 11 from starting locations or upstream ends of the depressions 140 to the first leading edges 35A to the axial length C of the first stator 31 taken along the axial direction from the first leading edges 35A to the first trailing edges 35B ranges from 0.25 to 0.75. A ratio of a distance h₂ taken along the axial direction relative to the central axis 11 from downstream ends of the depressions 140 to the first trailing edge 35B to the axial length C of the first stator 31 may range from 0.0 to 0.5. Hence, the downstream ends of the depressions 140 may be axially aligned with the first trailing edges 35B or, alternatively, the depressions 140 may extend further downstream of the first trailing edges 35B. In some embodiments, the depressions 140 may overlap the second stator 32 in the case of a tandem stator application. A ratio of a depth D of the depressions 140 taken along a radial direction relative to the central axis 11 to a span S of the first airfoils 35 may range from 0.05 to 0.1. The depth D may extend from the baseline surface BS to deepest locations of the depressions 140. All of the above ratios may apply to any of the stators of the gas turbine engine that include the depressions 140.

Any of the stators of the gas turbine engine 10 may include the depressions 40, 140. The stator may include both depressions 40, 140 respectively adjacent the pressure and suction sides of the airfoils of the stator without departing from the scope of the present disclosure. The depressions 40, 140 are shaped like an airfoil, but other shapes are contemplated. The upstream ends of the depressions 40, 140 may be bigger or smaller than their downstream ends. In some cases, the upstream and downstream ends of the depressions 40, 140 may be more rounded.

The depressions 40, 140 may draw flow and may help to adjust local pressure. The depressions 40 located adjacent the pressure side may divert the flow toward the trailing edge on the pressure side. This may increase the Mach number, reduce the local loading on the trailing edge, decrease flow deviation, may produce thinner and sharper wakes on the suction side. The depressions 40 located adjacent the pressure side may improve pressure side loss and wake missing loss. The depressions 140 located adjacent the suction side may divert the flow toward the trailing edge on the suction side, increase the local Mach number in this region, create a thinner/cleaner boundary layer, and push the boundary layer off the trailing edge. The depressions 140 located adjacent the suction side may reduce loss on the suction side. The depressions 40, 140 may improve duct loss and entry conditions into downstream components. Overall performance of the compressor may be improved thanks to the depressions 40, 140.

The terms "downstream" and "upstream" as used herein are all with reference to a direction of the main airflow through the core gaspath 15. In the context of the present disclosure, the expression "fluid machine" includes compressors and turbines.

The embodiments described in this document provide non-limiting examples of possible implementations of the present technology. Upon review of the present disclosure, a person of ordinary skill in the art will recognize that changes may be made to the embodiments described herein without departing from the scope of the present technology. Yet further modifications could be implemented by a person of ordinary skill in the art in view of the present disclosure, which modifications would be within the scope of the present technology.

## Claims

1. A fluid machine for an aircraft engine (10) comprising:
a first wall (21A) and a second wall (21B) circumferentially extending around a central axis (11);
a gaspath (15) defined between the first wall (21A) and the second wall (21B);
a rotor (22) having blades circumferentially distributed around the central axis (11) and extending across the gaspath (15), the rotor (22) rotatable about the central axis (11); and
a stator (31) in fluid communication with the rotor (22) and having:
a row of vanes (33) extending across the gaspath and circumferentially distributed around the central axis, the vanes (33) having airfoils (35) including leading edges (35A), trailing edges (35B), pressure sides (35C) and suction sides (35D) opposed to the pressure sides (35C); and depressions (40;140) defined in the first wall (21A), the depressions (40) extending from a baseline surface (BS) of the first wall (21A) away from the second wall (21B), a depression (40) of the depressions (40;140) located circumferentially between a pressure side (35C) of the pressure sides (35C) and a suction side (35D) of the suction sides (35D), the depression (40;140) axially overlapping the airfoils (35) and extending in a downstream direction from an upstream end to a downstream end, the downstream end located closer to a trailing edge (35B) of the trailing edges (35B) than to a leading edge (35A) of the leading edges (35A).

2. The fluid machine of claim 1, wherein a ratio of an axial length (h) of the depression (40;140) taken along an axial direction relative to the central axis (11) to an axial length (C) of the stator (31) taken along the axial direction from the leading edges (35A) to the trailing edges (35B) ranges from 0.5 to 1.5.

3. The fluid machine of claims 1 or 2, wherein a ratio of a thickness (t) of the depression (40;140) taken along a circumferential direction relative to the central axis (11) to a pitch (p) of the stator (31) extending along the circumferential direction from a leading edge (35A) of the leading edges (35A) to an adjacent leading edge (35A) of the leading edges (35A) ranges from 0.01 to 0.25.

4. The fluid machine of any of claims 1 to 3, wherein a ratio of a distance (h₁) taken along an axial direction relative to the central axis (11) from an upstream end of the depression (40;140) to a leading edge (35A) of the leading edges (35A) to an axial length (C) of the stator (31) taken along the axial direction from the leading edges (35A) to the trailing edges (35B) ranges from 0.25 to 0.75.

5. The fluid machine of any preceding claim, wherein a ratio of a distance (h₂) taken along an axial direction relative to the central axis (11) from the downstream end of the depression (40;140) to the trailing edge (35B) to an axial length (C) of the stator (31) taken along the axial direction from the leading edges (35A) to the trailing edges (35A) ranges from 0 to 0.5.

6. The fluid machine of any preceding claim, wherein a ratio of a depth (D) of the depression (40;140) taken along a radial direction relative to the central axis (11) to a span (S) of the airfoils (35) ranges from 0.05 to 0.1.

7. The fluid machine of any of claims 1 to 6, wherein the depression (40;140) is located closer to the pressure side (35C) than to the suction side (35D).

8. The fluid machine of any of claims 1 to 6, wherein the depression (40;140) is located closer to the suction side (35D) than to the pressure side (35C).

9. The fluid machine of any preceding claim, wherein the depression (40;140) overlaps the trailing edge (35B).

10. The fluid machine of any preceding claim, wherein the depression (40;140) extends substantially parallel to an airfoil (35) of the airfoils (35).

11. An aircraft engine comprising a compressor section (14) having the fluid machine according to any preceding claim.
